# EUROPEAN PATENT APPLICATION

(11) **EP 1 853 062 A2**
(43) Date of publication of application: **07.11.2007**
(21) Application number: 06255215.3
(22) Date of filing: 11.10.2006
(51) Int. Cl.: H04N 5/445

(54) **Apparatus and method for inputting optimum initial settings for a display device**

(30) Priority: 04.05.2006 US 418719
(71) Applicant: Syntax Brillian Corp., Tempe AZ 85281 (US)
(72) Inventor: Miller, Samuel, Cino Hills, California 91709 (US)
(74) Representative: Kenrick, Mark Lloyd

(57) **Abstract**

A method for setting initial values of certain parameters of a display device such as a flat panel television device is described. Upon detecting a first power-up, the display device presents options to the user for setting up the device for a home viewing environment or a store display environment. Based on the option selected by the user, the display device sets the initial values of parameters relating to color, brightness, contrast and other image display characteristics so that the settings are optimum for the selected environment.

## Description

### BACKGROUND OF THE INVENTION

### Field of the Invention

This invention relates to display devices, and in particular, it relates to a method and apparatus for providing initial settings for a display device.

### Description of the Related Art

Display devices, such as television devices using flat-panel, rear projection, and front projection displays including LCD, plasma, DLP, LCos, HTPS panels, employ complex display technology and require many control parameters to be property set for the display panels and their control apparatus in order to deliver satisfactory image quality. For example, one category of control parameters includes parameters that affect the color, brightness, contrast and other characteristics of the displayed image. Inappropriate settings of such parameters often lead to unsatisfactory colors fidelity and other undesirable results of the displayed image.

### SUMMARY OF THE INVENTION

The descriptions below use television devices as an example, but the invention applies to other type of display devices as well, such as desktop computer monitors, laptop computers, portable DVD players, etc. The display panel may be a liquid crystal display (LCD) panel, a plasma screen or the like.

One factor that influences the proper setting of certain control parameters (especially those related to color, brightness, contrast, etc.) for a display device is the ambient lighting conditions. For example, optimum settings for such parameters will be different when an LCD screen is viewed in an environment where ambient lighting is extremely bright halogen or fluorescent lighting, such as the conditions typically found in a store where television devices are displayed and sold, and when the ambient lighting is softer incandescent lighting, such as the viewing conditions typically found in consumers' homes. Optimum setting for a store environment uses higher brightness setting, higher contrast setting, very cold color temperature setting, color tint setting with oversaturated red and blue colors, very high sharpness, very bright backlight, etc. Optimum setting for a home environment, on the other hand, uses reduced brightness setting, lower contrast setting, a color temperature of about 6500 degrees, less red and blue oversaturation, softer sharpness, less bright backlight, etc. Using the settings optimized for one ambient lighting condition (e.g. store viewing condition) in a different ambient lighting condition (e.g. home viewing condition) will often result in inferior quality of the displayed image.

In newly manufactured television products, the various control parameters for the device are pre-set to certain values, referred to as factory settings. Conventionally, parameters related to color, brightness, contrast etc. are set by manufacturers to factory settings that are optimum for viewing in a store environment (e.g., bright fluorescent lighting). This is because a store will typically take a few products from a shipment as samples and set them up in the store for viewing by customers, typically without changing any of the factory settings. If the factory settings are optimized for home viewing, the sample products displayed at stores will have inferior display quality and appear unattractive to prospective purchasers. Thus, to ensure good image quality of displayed sample products (and hence to improve sales), manufactures have conventionally set relevant parameters to factory settings that are optimum for store display.

A problem with this approach is that after purchasing the television products, a majority of the consumers will use the products with the factory settings without re-setting them. Many consumers typically only set a limited number of parameters that are dictated by individual consumer preference, such as parental control, etc. and leave the other parameters unchanged. One reason for this consumer behavior is that consumers tend to assume that the products have been properly set at the factory for their use. Another factor that tends to deter consumers from adjusting the settings of their televisions is that the process is often cumbersome and complicated, and consumers often do not understand what the appropriate settings should be and therefore feel confused or frustrated.

As a result, in conventional television products, control parameters that affect color and other aspects of image quality are usually left at their factory settings, which are optimum for store display but unsuitable for home viewing, resulting in inferior image quality for the consumers.

The present invention provides a solution to the above-described problem and enables a display device to be properly set for its intended use.

Additional features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, the present invention provides a method in a display device for setting control parameters thereof, the method including detecting a first power-up condition of the display device, presenting to a user options for different viewing environments, receiving a response from the user indicating a selection of one of the options, and setting and storing values of a plurality of control parameters based on the received response.

In another aspect, the present invention provides a display device which includes a display panel and a control device for controlling the display panel based on a plurality of control parameters, the control device including a processor and a memory for storing values of a plurality of control parameters, wherein the control device is operable to detect a first power-up condition of the display device, present options for different viewing environments, receive an input indicating a selection of one of the options, and set and store values of a plurality of control parameters based on the received input.

It is to be understood that both the foregoing general description and the following detailed description are exemplary and explanatory and are intended to provide further explanation of the invention as claimed.

### BRIEF DESCRIPTION OF THE DRAWINGS

Figure 1 is a flow chart illustrating a method according to an embodiment of the present invention.
Figure 2 schematically illustrates a display device in which a method according to an embodiment of the present invention is implemented.

### DETAILED DESCRIPTION OF THE PREFERRED EMBODIMENTS

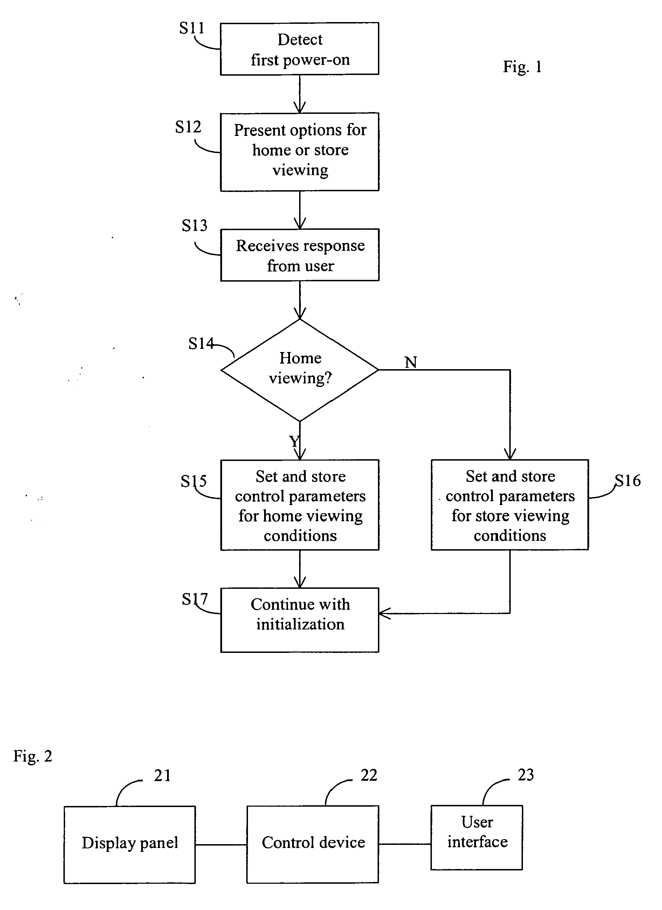

Fig. 1 illustrates a method for initially setting certain control parameters for a television device according to an embodiment of the present invention. When the television device is powered up for the first time after leaving the factory (referred to as first power-up), the television device detects this first power-up condition and carries out an initialization process.

First, the television device presents to the user options to set up the device for home or store viewing environments (step S12), and receives a response (an input) from the user that indicates a selection of one of the options (step S 13). In addition to store and home viewing, other viewing conditions may be included if desired. In a preferred embodiment, the options are presented using an on-screen display method, and the response is received from the user via a remote control device and the corresponding sensor on the television device or front panel control buttons on the display, all of which are well known in the art. The options may also be presented via an audio command, and the user may respond by voice or using the remote control or front panel control buttons on the display. Other suitable means of interaction between the television device and the user may be used. If the user chooses the home viewing option ("Y" in step S 14), the television device sets the relevant control parameters (i.e. parameters that controls color, brightness, contrast, and other aspects of the image display) to values that are optimum for typical home viewing conditions and stores these values (step S15). If the user chooses the store viewing option ("N" in step S 14), the television device sets the relevant control parameters to values that are optimum for typical store viewing conditions and stores these values (step S16). The television device than continues with the initialization process (step S 17).

The above-described steps are only carried out upon first power-up. In subsequent uses, the stored control parameter settings will be used to control the display panel. By using this method, both the stores and the consumers can properly set the relevant parameters of the television device to proper settings optimum for the intended viewing environment. The television device may allow the user to further adjust these parameters at any time. Other control parameters that are not affected by the viewing environment may be pre-set at the factory and are not affected by the above initialization process.

The method described above may be implemented in the display device by a processor controlled by software or firmware. Such processors are widely used in conventional display devices and the implementation is well within the ability of those skilled in the relevant art. Fig. 2 shows relevant components of a display device including a display panel 21, a control device 22 for controlling the display panel, and a user interface 23 for interacting with a user. The control device 22 may include a processor and a memory for storing control parameter settings. The control device also includes a suitable detector device (conventional) for detecting the first power-up condition of the device. The control device 22 performs the method shown in Fig. 1 and described above to properly set relevant control parameters at first power-up.

Although a television device is used as an example in the above descriptions, the method is broadly applicable to other types of display devices, including but not limited to desktop computer monitors, laptop computers, portable DVD players, etc. Moreover, although color-related settings for home and store viewing environments are used as an example in the above descriptions, the method is also applicable to the initial setting of other types of control parameters where different optimum settings are desired for different uses.

It will be apparent to those skilled in the art that various modification and variations can be made in the method of the present invention without departing from the spirit or scope of the invention. Thus, it is intended that the present invention cover modifications and variations that come within the scope of the appended claims and their equivalents.

## Claims

1. A method in a display device for setting control parameters thereof, comprising:
detecting a first power-up condition of the display device;
presenting to a user options for different viewing environments;
receiving a response from the user indicating a selection of one of the options; and
setting and storing values of a plurality of control parameters based on the received response.

2. The method of claim 1, wherein the display device is a flat panel television device.

3. The method of claim 1, wherein the options are presented using on-screen display and the response is received via a remote control device or front panel control buttons on the display device.

4. The method of claim 1, further comprising:
controlling the display device in accordance with the stored values of the plurality of control parameters.

5. A display device comprising:
a display panel; and
a control device for controlling the display panel based on a plurality of control parameters, the control device including a processor and a memory for storing values of a plurality of control parameters,
wherein the control device is operable to detect a first power-up condition of the display device, present options for different viewing environments, receive an input indicating a selection of one of the options, and set and store values of a plurality of control parameters based on the received input.

6. The device of claim 5, wherein the display device is a flat panel television device, a rear projection TV or a front projection TV.

7. The device of claim 5, wherein the options are presented using on-screen display, the device further comprising a remote control sensor or front panel control buttons for receiving the response from the user.

8. The device of claim 5, wherein the control device is further operable to control the display device in accordance with the stored values of the plurality of control parameters.
